# EUROPÄISCHE PATENTANMELDUNG

(11) **EP 3 469 890 A1**
(43) Veröffentlichungstag der Anmeldung: **17.04.2019**
(21) Anmeldenummer: 17195787.1
(22) Anmeldetag: 10.10.2017
(51) Int. Cl.: A01G 24/00, C05D 9/00, C05F 11/02, C05G 3/00, C05G 3/04

(54) **BODENHILFSSTOFF, VERWENDUNGEN DES BODENHILFSSTOFFS, EIN DEN BODENHILFSSTOFF UMFASSENDES SUBSTRAT SOWIE EIN VERFAHREN ZUR HERSTELLUNG EINES BODENHILFSSTOFFS**

(71) Anmelder: KNAUF AQUAPANEL GmbH, 44147 Dortmund (DE)
(72) Erfinder: Die Erfindernennung liegt noch nicht vor
(74) Vertreter: Berkenbrink, Kai-Oliver

(57) **Zusammenfassung**

Die Erfindung betrifft einen Bodenhilfsstoff, Verwendungen des Bodenhilfsstoffs, ein den Bodenhilfsstoff umfassendes Substrat sowie ein Verfahren zur Herstellung eines Bodenhilfsstoffs.

## Beschreibung

Die Erfindung betrifft einen Bodenhilfsstoff, Verwendungen des Bodenhilfsstoffs, ein den Bodenhilfsstoff umfassendes Substrat sowie ein Verfahren zur Herstellung eines Bodenhilfsstoffs.

Bodenhilfsstoffe sind Stoffe, die Substraten oder Böden für die Kultur von Pflanzen beigegeben werden.

Bei der Kultur von Pflanzen werden mit dem Begriff "Substrat" verschiedenste erdehaltige oder erdelose Stoffe oder Stoffgemische bezeichnet, die für die Kultur von Pflanzen dienen. Substrate in diesem Sinne sind mithin Stoffe beziehungsweise Stoffgemische, die Pflanzen als Wurzelraum dienen. Solche Substrate können insbesondere beispielsweise in Gefäße (beispielsweise in Blumentöpfe) oder in Böden (beispielsweise in Pflanzlöcher) eingebracht sein. Ferner können solche Substrate auch in bodenunabhängigen Anwendungen für die Kultur von Pflanzen verwendet werden, beispielsweise bei der Kultur von Pflanzen in Gewächshäusern, insbesondere bei der Kultur von Gemüsepflanzen in Gewächshäusern.

Substrate für die Kultur von Pflanzen sind in Form von erdehaltigen und erdelosen Substraten bekannt.

Erdelose Substrate bestehen beispielsweise aus einem oder mehreren mineralischen Komponenten.

Erdehaltige Substrate umfassen eine oder mehrere Erden und Beimischungen von einem oder mehreren Zuschlagstoffen. Erden für Substrate sind beispielsweise Torf oder Humus. Zuschlagstoffe für Substrate sind beispielsweise in Form von Sand, Lehm, Blähton oder Blähschiefer bekannt.

Mit "Bodenhilfsstoffen" werden Stoffe bezeichnet, die als Zuschlagstoffe solchen Substraten beigemischt werden können, die aber auch unmittelbar zur Verbesserung von Böden in Böden eingebracht werden können. Bei solchen Bodenhilfsstoffen handelt es sich in der Regel um hochporöse, mineralische Stoffe, durch die die Durchlüftung und Drainage in Substraten beziehungsweise Böden verbessert werden kann. Nachteilig an solch mineralischen, porösen Bodenhilfsstoffen ist jedoch, dass diese keine Nährstoffe für Pflanzen zur Verfügung stellen können. Ferner sind Nährstoffe nicht oder nur begrenzt durch Bodenhilfsstoffe speicherbar, soweit die vorteilhaften Eigenschaft der Bodenhilfsstoffe zur Drainage und Durchlüftung nicht negativ beeinträchtigt werden sollen. So könnten Nährstoffe in organischen Substanzen zwar durch die Bodenhilfsstoffe gespeichert werden; allerdings können die Poren durch solch organische Substanzen verstopft werden, so dass die Eigenschaft der Bodenhilfsstoffe zur Luftführung und Drainage hierdurch negativ beeinträchtigt werden kann. Ferner wird die Porosität von Bodenhilfsstoffen durch Mineraldünger, insbesondere Stickstoffdünger, zwar in der Regel nicht negativ beeinträchtigt; allerdings können solche Mineraldünger praktisch nicht durch mineralische Bodenhilfsstoffe aufgenommen beziehungsweise gespeichert werden.

Der Erfindung liegt die Aufgabe zugrunde, einen Bodenhilfsstoff zur Verfügung zu stellen, der die Fähigkeit zur Aufnahme von Stickstoff besitzt.

Ferner liegt der Erfindung die Aufgabe zugrunde, einen solchen Bodenhilfsstoff in Form eines mineralischen, porösen Bodenhilfsstoffs zur Verfügung zu stellen.

Ferner liegt der Erfindung die Aufgabe zugrunde, einen solchen Bodenhilfsstoff zur Verfügung zu stellen, der die Fähigkeit zur Aufnahme von Stickstoff besitzt, ohne dass hierdurch die Fähigkeit des Bodenhilfsstoffs zur Luftführung und Drainage negativ beeinträchtigt wird.

Ferner liegt der Erfindung die Aufgabe zugrunde, einen solchen Bodenhilfsstoff zur Verfügung zu stellen, der für den Anbau von Nutzpflanzen, die als Nahrungsmittel oder Genussmittel Verwendung finden, geeignet ist. Insbesondere soll der Bodenhilfsstoff bei seiner Verwendung als Bodenhilfsstoff zur Kultur von Nutzpflanzen keinerlei Stoffe, die den Geschmack oder die Genießbarkeit solcher Nutzpflanzen negativ beeinträchtigen können, abgeben.

Zur Lösung dieser Aufgaben wird erfindungsgemäß zur Verfügung gestellt ein Bodenhilfsstoff, der Körner aus geblähtem Perlit umfasst, wobei auf die Körner aus geblähtem Perlit Huminsäuren aufgetragen sind.

Überraschend hat sich erfindungsgemäß herausgestellt, dass ein Bodenhilfsstoff, der die vorstehenden Aufgaben löst, durch einen Bodenhilfsstoff aus Körnern aus geblähtem Perlit, auf die Huminsäuren aufgetragen sind, gelöst werden können. Überraschend hat sich im Rahmen der Erfindung herausgestellt, dass Huminsäuren auf geblähten Perlit aufgetragen werden können, wobei die Huminsäuren auf dem geblähten Perlit verbleiben. Ferner hat sich erfindungsgemäß überraschend herausgestellt, dass geblähter Perlit, auf den Huminsäuren aufgetragen sind, die Fähigkeit zur Aufnahme von Stickstoff besitzt. Die Erfinder vermuten, dass diese Eigenschaft des erfindungsgemäßen Bodenhilfsstoffs zur Aufnahme von Stickstoff insbesondere an der Kationenaustauschkapazität von Huminsäuren liegt.

Mit "Stickstoff" werden hierin Stickstoff und Stickstoffionen sowie stickstoffhaltige Verbindungen, die das Pflanzenwachstum fördern, beispielsweise Nitrat, bezeichnet.

Bei geblähtem Perlit handelt es sich bekanntermaßen um einen inerten, hochporösen mineralischen Stoff. Auf Grund dieser Eigenschaften eignet sich geblähter Perlit hervorragend als Bodenhilfsstoff zur Verbesserung der Luftführung und Drainage in einem Substrat oder in einem Boden.

Erfindungsgemäß hat sich herausgestellt, dass durch den Auftrag von Huminsäuren auf geblähten Perlit dessen Fähigkeit zur Luftführung und Drainage praktisch nicht beeinträchtigt wird.

Ferner wurde erfindungsgemäß überraschend festgestellt, dass geblähter Perlit, auf den erfindungsgemäß Huminsäuren aufgetragen sind, die Fähigkeit besitzt, Stickstoff zu speichern und langsam wieder abzugeben, insbesondere in feuchter Umgebung. Hierdurch wirkt der erfindungsgemäße Bodenhilfsstoff als "Puffer" für Stickstoff, der aufgenommenen Stickstoff langsam wieder an die Umgebung beziehungsweise das umgebende Substrat oder das umgebende Erdreich abgeben kann. Dies gibt Pflanzen, die unter Verwendung des erfindungsgemäßen Bodenhilfsstoffes kultiviert werden, ausreichend Zeit, den vom erfindungsgemäßen Bodenhilfsstoff verzögert wieder abgegebenen Stickstoff aufzunehmen.

Ferner hat sich erfindungsgemäß herausgestellt, dass durch den erfindungsgemäßen Bodenhilfsstoff die Qualität von Nutzpflanzen nicht negativ beeinträchtigt wird, soweit der Bodenhilfsstoff, beispielsweise in einem Substrat, zur Kultur von Pflanzen verwendet wird. Insoweit ist auch relevant, dass Huminsäuren ein natürlicher Bestandteil von Böden sind und daher keinerlei negative Auswirkungen auf Pflanzen ausüben.

Mit "Huminsäuren" werden hierin ganz allgemein solch hochmolekulare, chemische Verbindungen bezeichnet, die sich aus abgestorbenem Pflanzenmaterial im Zuge der Humusbildung in Böden durch Humifizierung bilden und regelmäßig eine Molmasse im Bereich von etwa 2.000 bis etwa 500.000 Dalton (Da) aufweisen. Insofern umfassen Huminsäuren erfindungsgemäß sowohl die niedermolekularen, wasserlöslichen Huminsäuren mit einer Molmasse von unter 3.000 Dalton, die auch als Fulvosäuren bezeichnet werden, als auch die hochmolekularen, alkalilöslichen Huminsäuren mit einer Molmasse von über 3.000 Dalton.

Soweit die Huminsäuren auf den geblähten Perlit "aufgetragen" sind, ist hiermit zum Ausdruck gebracht, dass die Huminsäuren auf die Oberfläche des geblähten Perlits aufgetragen sind beziehungsweise dass die Oberfläche des geblähten Perlits mit Huminsäuren beschichtet ist. Bevorzugt sind die Huminsäuren auf die vollständige Oberfläche des geblähten Perlits aufgetragen beziehungsweise ist die Oberfläche des geblähten Perlits vollständig mit Huminsäuren beschichtet. Die "Oberfläche" des geblähten Perlits ist die gesamte Oberfläche des geblähten Perlits, also sowohl seine äußere Oberfläche (also die von außen sichtbare Oberfläche) als auch seine innere Oberfläche (also die von seinen offenen Poren gebildete Oberfläche). Aufgrund der hohen offenen Porosität von geblähtem Perlit weist dieser eine große innere Oberfläche auf, so dass der erfindungsgemäße Bodenhilfsstoff eine besonders hohe Fähigkeit zur Aufnahme von Stickstoff besitzt, wenn auf die gesamte Oberfläche des geblähten Perlits Huminsäuren aufgetragen sind beziehungsweise die gesamte Oberfläche des geblähten Perlits mit Huminsäuren beschichtet ist.

Der Umfang der Fähigkeit des erfindungsgemäßen Bodenhilfsstoffs, Stickstoff aufzunehmen, steigt mit zunehmender Konzentration der auf den geblähten Perlit aufgetragenen Huminsäuren. Allerdings wurde erfindungsgemäß festgestellt, dass ab einer bestimmten Konzentration die Fähigkeit zur Stickstoffaufnahme praktisch nicht weiter zunimmt. Dies ist ab einer Konzentration der Huminsäuren von etwa 2 Masse-% der Fall. Ferner wurde erfindungsgemäß festgestellt, dass ab einer Konzentration der Huminsäuren von etwa 2 Masse-% die Poren des geblähten Perlits verstopft werden können, so dass hierdurch die Fähigkeit des geblähten Perlits zur Drainage und Luftführung negativ beeinträchtigt werden kann. Erfindungsgemäß wurde festgestellt, dass eine ideale Konzentration von Huminsäuren auf dem geblähten Perlit vorliegt, wenn die Huminsäuren in einer solchen Konzentration auf den geblähten Perlit aufgetragen sind, dass die Körner eine braune Farbe aufweisen. Dies ist ab einer Konzentration der Huminsäuren von etwa 0,1 Masse-% der Fall. Insofern kann geblähter Perlit, wenn auf diesen erfindungsgemäß Huminsäuren aufgetragen sind, bevorzugt durch eine charakteristische braune Farbe gekennzeichnet sein. Je nach Konzentration der Huminsäuren kann diese braune Farbe des geblähten Perlits von rotbraun bis schwarzbraun reichen. Ganz besonders bevorzugt sind auf die Körner aus geblähtem Perlit Huminsäuren in einer solchen Konzentration aufgetragen, dass die Körner eine schokoladenbraune Farbe aufweisen.

Bevorzugt ist vorgesehen, dass die Huminsäuren in einer Konzentration im Bereich von 0,1 bis 2 Masse-% auf die Körner aus geblähtem Perlit aufgetragen sind. Die "Konzentration" der Huminsäuren auf dem geblähten Perlit bezeichnet hierin den Massenanteil der auf die Körner aus geblähtem Perlit aufgetragenen Huminsäuren, bezogen auf die Gesamtmasse der Körner aus geblähtem Perlit. Erfindungsgemäß hat sich herausgestellt, dass die Körner aus geblähtem Perlit eine braune Farbe aufweisen, wenn die Huminsäuren in einer solchen Konzentration auf die Körner aus geblähtem Perlit aufgetragen sind. Eine schokoladenbraune Farbe weisen die Körner insbesondere dann auf, wenn Huminsäuren in einer Konzentration im Bereich von 0,3 bis 1,5 Masse-% auf die Körner aus geblähtem Perlit aufgetragen sind. Besonders bevorzugt ist erfindungsgemäß daher vorgesehen, dass die Huminsäuren in einer Konzentration im Bereich von 0,3 bis 1,5 Masse-% auf die Körner aus geblähtem Perlit aufgetragen sind. Die vorgemachten Angaben zur Konzentration der Huminsäuren sind bezogen auf die Masse der Körner aus geblähtem Perlit (ohne die Huminsäuren).

Nach einer besonders bevorzugten Ausführungsform liegen die Huminsäuren in Form von wasserlöslichen Huminsäuren vor.

Der Vorteil solch wasserlöslicher Huminsäuren liegt insbesondere auch darin, dass solch wasserlösliche Huminsäuren besonders einfach auf die Körner aus geblähtem Perlit aufgetragen werden können. Beispielsweise können wasserlösliche Huminsäuren ganz einfach dadurch auf den geblähten Perlit aufgetragen werden, dass die wasserlöslichen Huminsäuren in Wasser gelöst und diese Lösung anschließend auf den geblähten Perlit aufgetragen wird.

Vorteilhaft an einem solch wässrigen Lösungsmittel ist ferner, dass durch dieses der Geschmack und die Genießbarkeit von Nutzpflanzen, die unter Verwendung des erfindungsgemäßen Bodenhilfsstoffs kultiviert werden, nicht negativ beeinträchtigt werden.

Bevorzugt liegen die wasserlöslichen Huminsäuren mit einer Molmasse unter 3.000 Dalton vor, also bevorzugt in Form von Fulvosäuren.

Besonders bevorzugt liegen die Huminsäuren ausschließlich in Form solch wasserlöslicher Huminsäuren, insbesondere mit einer Molmasse unter 3.000 Dalton.

Bevorzugt weist der geblähte Perlit eine Korngröße im Bereich von > 0 mm bis 8 mm auf. Besonders bevorzugt weist der geblähte Perlit eine Korngröße im Bereich von > 0 mm bis 6 mm auf.

Nach einer bevorzugten Ausführungsform weist der geblähte Perlit ein breites Kornband auf, also eine Korngrößenverteilung, die sowohl kleinere als auch größere Korngrößen umfasst. Denn kleinere Korngrößen weisen eine bessere Wasseraufnahmekapazität als größere Korngrößen auf, während gröbere Korngrößen eine bessere Drainage und Durchlüftung ermöglichen. Soweit der geblähte Perlit daher sowohl kleine als auch große Körner aufweist, besitzt er gleichzeitig die Fähigkeit, einer guten Wasseraufnahme, einer guten Drainagewirkung und einer guten Durchlüftung.

Nach einer bevorzugten Ausführungsform kann insoweit vorgesehen sein, dass der geblähte Perlit Körner mit einer Korngröße unter 1 mm und Körner mit einer Korngröße von 1 mm und darüber umfasst. Nach einer Ausführungsform ist vorgesehen, dass der geblähte Perlit wenigstens 10 Masse-% Körner mit einer Korngröße unter 1 mm und wenigstens 10 Masse-% Körner mit einer Korngröße von 1 mm und darüber erfasst. Nach einer Fortbildung dieses Erfindungsgedanken umfasst der geblähte Perlit 10 bis 90 Masse-% Körner in einer Korngröße unter 1 mm und 10 bis 90 Masse-% Körner mit einer Korngröße von 1 mm und darüber. Nach einer weiteren Fortbildung dieses Erfindungsgedankens umfasst der geblähte Perlit 10 bis 90 Masse-% Körner mit einer Korngröße unter 1 mm und 10 bis 90 Masse-% Körner mit einer Korngröße von 1 bis 8 mm, insbesondere bevorzugt von 1 bis 6 mm. Die vorgemachten Angaben in Masse-% sind bezogen auf die Gesamtmasse des geblähten Perlits. Die Korngröße ist bestimmt gemäß DIN EN 933-1:2012-03.

Der geblähte Perlit weist bevorzugt eine Schüttdichte im Bereich von 60 bis 120 kg/m³ und besonders bevorzugt eine Schüttdichte von etwa 90 kg/m³ auf, bestimmt gemäß der DIN EN 12580:2014-02.

Nach einer bevorzugten Ausführungsform ist vorgesehen, dass der erfindungsgemäße Bodenhilfsstoff Wasser umfasst.

Denn zum einen wurde erfindungsgemäß festgestellt, dass Wasser die gleichmäßige Verteilung der Huminsäuren über den geblähten Perlit fördert. Ferner erleichtert ein Anteil an Wasser im erfindungsgemäßen Bodenhilfsstoff dessen Handhabung, da die Körner leicht aneinander haften. Ferner kann durch Wasser im Bodenhilfsstoff einer Staubentwicklung bei der Handhabung des Bodenhilfsstoffs vorgebeugt werden.

Erfindungsgemäß wurde festgestellt, dass bei einem zu geringen Anteil an Wasser im Bodenhilfsstoff teilweise eine unzureichende Verteilung der Huminsäuren über den geblähten Perlit zu beobachten ist und die Haftung der Körner aneinander nur gering ist, so dass der Bodenhilfsstoff teilweise nicht leicht zu handhaben ist. Ferner wurde festgestellt, dass bei einem zu hohen Anteil an Wasser im Bodenhilfsstoff der geblähte Perlit verklumpt, so dass er ebenfalls nur noch schwer zu handhaben ist. Insoweit hat sich herausgestellt, dass ein Anteil an Wasser im Bodenhilfsstoff von 10 bis 30 Masse-% ideal ist, so dass nach einer Ausführungsform vorgesehen ist, dass der Bodenhilfsstoff einen Anteil an Wasser im Bereich von 10 bis 30 Masse-% umfasst. Erfindungsgemäß wurde festgestellt, dass der ideale Anteil an Wasser im Bereich von 20 Masse-% Wasser liegt, so dass bevorzugt vorgesehen ist, dass der Anteil an Wasser im Bodenhilfsstoff möglichst nah an diesen idealen Wert angenähert ist. Nach einer besonders bevorzugten Ausführungsform kann insoweit vorgesehen sein, dass der Bodenhilfsstoff einen Anteil an Wasser im Bereich von 15 bis 25 Masse-% umfasst. Die vorgemachten Angaben zum Anteil an Wasser im Bodenhilfsstoff in Masse-% sind bezogen auf die Gesamtmasse des geblähten Perlits.

Wasser kann beispielsweise ganz oder teilweise als Lösungsmittel, in dem die Huminsäuren gelöst sind, auf den geblähten Perlit aufgetragen und hierdurch und in den erfindungsgemäßen Bodenhilfsstoff eingetragen sein.

Erfindungsgemäß hat sich herausgestellt, dass die vorteilhaften Eigenschaften des erfindungsgemäßen Bodenhilfsstoff, also insbesondere seine guten Durchlüftungs- und Drainageeigenschaften bei seiner gleichzeitig hohen Fähigkeit zur Aufnahme von Stickstoff, negativ beeinträchtigt werden können, wenn der Bodenhilfsstoff neben geblähtem Perlit, Huminsäuren und gegebenenfalls Wasser weitere Komponenten umfasst.

Insofern hat sich erfindungsgemäß herausgestellt, dass insbesondere verrottbare Substanzen, vor allem verrottbares pflanzliches Material, die Durchlüftungs- und Drainageeigenschaften des geblähten Perlits negativ beeinträchtigen können.

Nach einer bevorzugten Ausführungsform ist daher vorgesehen, dass der erfindungsgemäße Bodenhilfsstoff verrottbare Substanzen, insbesondere verrottbares pflanzliches Material, in einen Anteil unter 10 Masse-% umfasst, bevorzugter in einem Anteil unter 5 Masse-% und noch bevorzugter in einem Anteil unter 1 Masse-%, jeweils bezogen auf die Gesamtmasse an geblähtem Perlit, Huminsäuren und, soweit vorhanden, Wasser. Nach einer bevorzugten Ausführungsform weist der erfindungsgemäße Bodenhilfsstoff keinerlei verrottbare Substanzen, insbesondere kein verrottbares pflanzliches Material auf. Ein besonderer Vorteil eines erfindungsgemäßen Bodenhilfsstoffs, der solch geringe oder keine Anteil an verrottbaren Substanzen aufweist, liegt insbesondere auch darin, dass dieser praktisch unbegrenzt lagerbar ist. Ein weiterer Vorteil eines erfindungsgemäßen Bodenhilfsstoffs, der solch geringe oder keine Anteil an verrottbaren Substanzen aufweist, liegt ferner darin, dass dieser als Bodenhilfsstoff für praktisch jedes Substrat universell einsetzbar ist, da der Bodenhilfsstoff die Organik des Substrats praktisch nicht beeinflusst.

Nach einer bevorzugten Ausführungsform ist vorgesehen, dass der erfindungsgemäße Bodenhilfsstoff Erden (also Erdböden beziehungsweise Böden), in einen Anteil unter 10 Masse-% umfasst, bevorzugter in einem Anteil unter 5 Masse-% und noch bevorzugter in einem Anteil unter 1 Masse-%, jeweils bezogen auf die Gesamtmasse aus geblähtem Perlit, Huminsäuren und, soweit vorhanden, Wasser. Nach einer bevorzugten Ausführungsform weist der erfindungsgemäße Bodenhilfsstoff keinerlei Erden auf, liegt also als erdenloser Bodenhilfsstoff vor.

Nach einer Ausführungsform ist vorgesehen, dass der erfindungsgemäße Bodenhilfsstoff zu wenigstens 90 Masse-%, bevorzugter zu wenigstens 95 Masse-% und noch bevorzugter zu wenigstens 99 Masse-% ausschließlich aus geblähtem Perlit, Huminsäuren und, soweit vorhanden, Wasser besteht, jeweils bezogen auf die Gesamtmasse aus geblähtem Perlit, Huminsäuren und, soweit vorhanden, Wasser.

Insofern kann entsprechend vorgesehen sein, dass der Bodenhilfsstoff neben geblähtem Perlit, Huminsäuren und gegebenenfalls Wasser weitere Substanzen in einem Anteil unter 10 Masse-% aufweist, bevorzugter in einem Anteil unter 5 Masse-%, noch bevorzugter in einem Anteil unter 1 Masse-%, jeweils bezogen auf die Gesamtmasse aus geblähtem Perlit, Huminsäuren und, soweit vorhanden, Wasser.

Nach einer Ausführungsform besteht der erfindungsgemäße Bodenhilfsstoff ausschließlich aus geblähtem Perlit, Huminsäuren und gegebenenfalls Wasser.

Erfindungsgemäß hat sich herausgestellt, dass der erfindungsgemäße Bodenhilfsstoff in reiner Form zur Kultur beziehungsweise Aufzucht von Pflanzen verwendet werden kann. Gegenstand der Erfindung ist insoweit auch die Verwendung des erfindungsgemäßen Bodenhilfsstoffs als Substrat für Pflanzen, also als Substrat beziehungsweise Kultursubstrat für die Kultur beziehungsweise die Aufzucht von Pflanzen. Der erfindungsgemäße Bodenhilfsstoff wird insoweit als erdeloses Substrat für die Kultur von Pflanzen beziehungsweise als Wurzelraum für Pflanzen verwendet. Bevorzugt kann diese erfindungsgemäße Verwendung mit der Maßgabe erfolgen, dass der Bodenhilfsstoff als Substrat für die Kultur beziehungsweise Aufzucht wenigstens einer der folgenden Pflanzen verwendet wird: Gurken, Tomaten, Paprika, Rosen, Anturien oder Gerbera.

Erfindungsgemäß wurde festgestellt, dass durch den erfindungsgemäßen Bodenhilfsstoff die Mikrobiologie aktiviert werden kann. Insoweit aktiviert der erfindungsgemäße Bodenhilfsstoff das Wachstum von Mikroorganismen, wie beispielsweise Pilzen oder Bakterien. Soweit der Bodenhilfsstoff daher erfindungsgemäß als erdenloses Substrat verwendet wird, können sich auf diesem schon nach verhältnismäßig kurzer Zeit Mikroorganismen, die das Pflanzenwachstum fördern, ansiedeln.

Erfindungsgemäß hat sich herausgestellt, dass sich das Einbringen des erfindungsgemäßen Bodenhilfsstoffs in natürliche (also gewachsene beziehungsweise in der Natur vorliegende) Böden sehr vorteilhaft auf das Wachstum von Pflanzen in diesen Böden auswirken kann. Insbesondere kann sich das Einbringen des erfindungsgemäßen Bodenhilfsstoffs sehr vorteilhaft auf das Wachstum von Pflanzen in nährstoffarmen, beispielsweise ariden Böden auswirken. Dies liegt offenbar nicht nur an der Fähigkeit des Bodenhilfsstoffs, Stickstoff zu speichern und verzögert wieder abzugeben, sondern offenbar insbesondere auch an der vorstehenden Eigenschaft, die Mikrobiologie zu aktivieren. Insoweit ist ein Gegenstand der Erfindung die Verwendung des erfindungsgemäßen Bodenhilfsstoffs als Bodenhilfsstoff in natürlichen Böden, beispielsweise in nährstoffarmen Böden oder beispielsweise zur Bodenverbesserung bei Rasenanlagen oder Gehölzflächen. Diese Verwendung kann mit der Maßgabe erfolgen, dass der Bodenhilfsstoff in den Boden eingebracht wird. Insbesondere kann vorgesehen sein, dass der Bodenhilfsstoff in einer Masse im Bereich von 1 bis 5 kg pro Quadratmeter Boden, besonders bevorzugt in einer Masse im Bereich von 1,5 bis 3 kg pro Quadratmeter Boden in den Boden eingebracht wird.

Nach einer alternativen Ausführungsform kann der erfindungsgemäße Bodenhilfsstoff auch sehr vorteilhaft als Zuschlagstoff für Substrate verwendet werden. In diesen Substraten kann der erfindungsgemäße Bodenhilfsstoff, wie zuvor ausgeführt, insbesondere zur Verbesserung der Drainage und Luftführung bei gleichzeitiger Fähigkeit zur Aufnahme beziehungsweise zum Puffern von Stickstoff verwendet werden. Gegenstand der Erfindung ist insoweit auch die Verwendung des erfindungsgemäßen Bodenhilfsstoffs als Komponente in einem Substrat. Ein Substrat in diesem Sinne ist, wie oben ausgeführt, ein Substrat für die Kultur beziehungsweise Aufzucht von Pflanzen, also insbesondere ein Substrat, das Pflanzen als Wurzelraum dient.

Gegenstand der Erfindung ist ferner insoweit ein Substrat, welches einen erfindungsgemäßen Bodenhilfsstoff umfasst.

Ein solches Substrat kann neben dem erfindungsgemäßen Bodenhilfsstoff einen oder mehrere weitere Komponenten umfassen, die aus dem Stand der Technik als Komponenten für Substrate bekannt sind. Bei diesen weiteren Komponenten kann es sich beispielsweise um mineralische Komponenten, um organische Komponenten oder um ein Gemisch aus solch mineralischen und organischen Komponenten handeln. Organische Komponenten können beispielsweise in Form wenigstens einer der Stoffe Torf, Humus, Holzfasern, Rinde oder Kokosfasern vorliegen. Mineralische Komponenten können beispielsweise in Form wenigstens einer der Stoffe Sand, Lehm, Ton, Blähton oder Kalk vorliegen.

Je nach Zusammensetzung und beabsichtigter Verwendung des Substrats kann der Bodenhilfsstoff in diesem in unterschiedlichen Anteilen vorliegen.

In einer allgemeinen Ausführungsform kann bevorzugt vorgesehen sein, dass der erfindungsgemäße Bodenhilfsstoff in einem Anteil im Bereich von 1 bis 50 Volumen-%, bezogen auf das Gesamtvolumen des Substrats, in dem Substrat vorliegt, noch bevorzugter in einem Anteil im Bereich von 5 bis 40 Volumen -%.

Nach einer Ausführungsform umfasst das Substrat neben dem erfindungsgemäßen Bodenhilfsstoff wenigstens eine der folgenden weiteren Komponenten: Holzfasern, Rinde oder Kokosfasern. Ein solches Substrat kann bevorzugt für Topfkräuter verwendet werden, beispielsweise Topfkräuter in Form von Basilikum, Schnittlauch, Petersilie oder Kresse. Bei dieser Ausführungsform kann der erfindungsgemäße Bodenhilfsstoff bevorzugt in einem Anteil im Bereich von 5 bis 20 Volumen-%, besonders bevorzugt in einem Anteil im Bereich von 10 bis 15 Volumen-% im Substrat vorliegen. Die weiteren Komponenten können bevorzugt in einem Anteil im Bereich von 80 bis 95 Volumen-%, besonders bevorzugt in einem Anteil im Bereich von 85 bis 90 Volumen-% im Substrat vorliegen. Die vorgemachten Angaben in Volumen-% sind jeweils bezogen auf das Gesamtvolumen des Substrats.

Nach einer Ausführungsform umfasst das Substrat neben dem erfindungsgemäßen Bodenhilfsstoff wenigstens eine der folgenden weiteren Komponenten: Torf oder Humus, besonders bevorzugt Torf. Ein solches Substrat kommt für die Kultur verschiedenster Pflanzen in Frage.

Bei dieser Ausführungsform kann der erfindungsgemäße Bodenhilfsstoff bevorzugt in einem Anteil im Bereich von 10 bis 40 Volumen-%, besonders bevorzugt in einem Anteil im Bereich von 20 bis 30 Volumen-% im Substrat vorliegen. Die weiteren Komponenten können bevorzugt in einem Anteil im Bereich von 60 bis 90 Volumen-%, besonders bevorzugt in einem Anteil im Bereich von 70 bis 80 Volumen-% im Substrat vorliegen. Die vorgemachten Angaben in Volumen-% sind jeweils bezogen auf das Gesamtvolumen des Substrats.

Die hierin gemachten Angaben zu Anteilen in Volumen-% sind bestimmt gemäß DIN EN 12580:2014-02.

Gegenstand der Erfindung ist auch ein Verfahren zur Herstellung eines Bodenhilfsstoffs, insbesondere zur Herstellung des erfindungsgemäßen Bodenhilfsstoffs.

Das Verfahren zur Herstellung des Bodenhilfsstoffs umfasst die folgenden Schritte:
Zur Verfügungstellung von geblähtem Perlit;
zur Verfügungstellung von Huminsäuren;
Auftragen der Huminsäuren auf den geblähten Perlit.

Durch das Auftragen der Huminsäuren auf den geblähten Perlit wird der Bodenhilfsstoff erhalten, insbesondere der erfindungsgemäße Bodenhilfsstoff.

Demnach kann ein Verfahren zur Herstellung des erfindungsgemäßen Bodenhilfsstoff überraschend einfach durchgeführt werden. Danach reicht es zur Herstellung des erfindungsgemäßen Bodenhilfsstoffs aus, Huminsäuren auf geblähten Perlit aufzutragen, um einen erfindungsgemäßen Bodenhilfsstoff zu erhalten.

Grundsätzlich wird das Verfahren besonders bevorzugt derart durchgeführt, dass hierdurch der erfindungsgemäße Bodenhilfsstoff, insbesondere mit den hierin beschriebenen Merkmalen, erhalten wird.

Um die Huminsäuren auf den geblähten Perlit aufzutragen, werden Huminsäuren bevorzugt in Form von wasserlöslichen Huminsäuren zur Verfügung gestellt, insbesondere in Form der zuvor beschriebenen, wasserlöslichen Huminsäuren mit einer Molmasse von unter 3.000 Dalton.

In dieser Form werden die Huminsäuren zur Verfügung gestellt und auf den geblähten Perlit aufgetragen.

Um die Huminsäuren auf den geblähten Perlit aufzutragen, werden Huminsäuren besonders bevorzugt als wässrige Lösung zur Verfügung gestellt. Der besondere Vorteil solch als wässriger Lösung zur Verfügung gestellten Huminsäuren liegt insbesondere darin, dass diese besonders einfach auf den geblähten Perlit aufzutragen sind. Zum weiteren hat das Auftragen der Huminsäuren auf den geblähten Perlit in Form einer wässrigen Lösung den weiteren Vorteil, dass hierdurch gleichzeitig der zuvor bezeichnete Anteil an Wasser im erfindungsgemäßen Bodenhilfsstoff zur Verfügung gestellt werden kann.

Soweit die Huminsäuren als wässrige Lösung zur Verfügung gestellt werden, also als in Wasser gelöste Huminsäuren, können die Huminsäuren bevorzugt in einer solchen Konzentration im Wasser vorliegen, dass hierdurch nach Auftragen der wässrigen Lösung auf den geblähten Perlit die zuvor bezeichnete, bevorzugte Konzentration von Huminsäuren auf dem geblähten Perlit erreicht wird. Als vorteilhaft hat es sich insoweit herausgestellt, wenn die Huminsäuren als wässrige Lösung mit einer Konzentration der Huminsäuren im Bereich von 0,5 Masse-% bis 10 Masse-%, besonders bevorzugt mit einer Konzentration im Bereich von 1,5 Masse-% bis 6 Masse-% zur Verfügung gestellt werden, bezogen auf die Gesamtmasse der wässrigen Lösung, also der Gesamtmasse aus Wasser und Huminsäuren. Erfindungsgemäß hat sich herausgestellt, dass bei einem Auftragen einer Lösung, in der Huminsäuren in einer solchen Konzentration vorliegen, auf den geblähten Perlit die oben bezeichnete Konzentration von Huminsäuren auf dem Perlit erreicht werden kann.

Der für das Verfahren zur Verfügung gestellte Perlit weist bevorzugt die oben bezeichnete Korngröße beziehungsweise Korngrößenverteilung auf.

Die Art und Weise des Auftrags der wässrigen Huminsäurelösung auf den geblähten Perlit kann beispielsweise gemäß den aus dem Stand der Technik bekannten Methoden zum Auftragen einer wässrigen Lösung auf eine Oberfläche, insbesondere auf eine Oberfläche eines mineralischen Schüttgutes, erfolgen.

Beispielsweise können die Huminsäuren, insbesondere als wässrige Lösung, mit dem geblähten Perlit gemischt werden, bevorzugt in einem Mischer, beispielsweise in einer Trommelmischer, Durchlaufmischer oder Freifallmischer.

Nach einer bevorzugten Ausführungsform werden die Körner aus geblähtem Perlit, um auf diese die wässrige Huminsäurelösung aufzutragen, durch ein Aerosol (also einen Nebel) einer wässrigen Lösung der Huminsäuren geführt. Um ein solches Aerosol zur Verfügung zu stellen, kann die wässrige Lösung besonders bevorzugt zu einem Aerosol versprüht werden, insbesondere beispielsweise durch Versprühen mittels Düsen. Nach einer bevorzugten Ausführungsform ist vorgesehen, dass die Körner aus geblähtem Perlit im freien Fall durch ein Aerosol einer wässrigen Lösung der Huminsäuren geführt werden.

Nach einer Ausführungsform kann eine wässrige Lösung der Huminsäuren, beispielsweise in einem Durchlaufmischer, auf die Körner aus geblähtem Perlit aufgetragen werden.

Nach einer besonders bevorzugten Ausführungsform wird eine wässrige Lösung der Huminsäuren in einem Freifallmischer auf die Körner aus geblähtem Perlit aufgetragen. Insoweit kann in einem solchen Freifallmischer, insbesondere durch Düsen, ein Aerosol einer wässrigen Lösung der Huminsäuren ausgebildet werden, wobei dieses Aerosol beim Fallen der Körner aus geblähtem Perlit im Freifallmischer auf die Körner aufgetragen wird.

Nach einer Ausführungsform kann auch vorgesehen sein, dass die Huminsäuren direkt als wässrige Lösung auf den geblähten Perlit gesprüht wird, beispielsweise durch Düsen.

Nach einer bevorzugten Ausführungsform wird der durch das erfindungsgemäße Verfahren erhaltene Bodenhilfsstoff, insbesondere der erfindungsgemäße Bodenhilfsstoff, weiter derart bearbeitet, dass ein Substrat erhalten wird. Hierzu kann das erfindungsgemäße Verfahren bevorzugt die folgenden weiteren Schritte umfasst:
Zur Verfügungstellung wenigstens einer Komponente für ein Substrat;
Mischen des Bodenhilfsstoffs und der wenigstens einen Komponente zum Erhalt eines Substrats.

Mithin wird zur Herstellung eines Substrats wenigstens eine Komponente zur Verfügung gestellt, die zur Herstellung eines Substrates verwendbar ist. Bei diesen Komponenten kann es sich insbesondere um einen oder mehrere Komponenten handeln, die aus dem Stand der Technik als Komponenten für Substrate bekannt sind. Insbesondere kann es sich bei diesen Komponenten um eine oder mehrere der oben genannten, weiteren Komponenten für Substrate handeln, also insbesondere um mineralische Komponenten, um organische Komponenten oder um ein Gemisch aus solch mineralischen und organischen Komponenten. Organische Komponenten können beispielsweise in Form wenigstens einer der Stoffe Torf, Humus, Holzfasern, Rinde oder Kokosfasern zur Verfügung gestellt werden. Mineralische Komponenten können beispielsweise in Form wenigstens einer der Stoffe Sand, Lehm, Ton, Blähton oder Kalk zur Verfügung gestellt werden.

Der durch das erfindungsgemäße Verfahren erhaltene Bodenhilfsstoff wird nunmehr zum Erhalt eines Substrates mit einem oder mehreren dieser Komponenten gemischt. Besonders bevorzugt werden der Bodenhilfsstoff und die wenigstens eine Komponente derart gemischt, dass eines der oben genannten, erfindungsgemäßen Substrate erhalten wird.

Weitere Merkmale der Erfindung ergeben sich aus den Ansprüchen und dem nachfolgenden Ausführungsbeispiel der Erfindung.

Sämtliche Merkmale der Erfindung können, einzeln oder in Kombination, beliebig miteinander kombiniert sein.

### Ausführungsbeispiel

Gemäß dem Ausführungsbeispiel des erfindungsgemäßen Verfahrens wurden zunächst geblähter Perlit und Huminsäuren zur Verfügung gestellt.

Der zur Verfügung gestellte geblähte Perlit wies folgende Korngrößenverteilung gemäß DIN EN 933-1:2012-03 auf, wobei die Angaben in Masse-% jeweils bezogen sind auf die Gesamtmasse des geblähten Perlits:

| | |
|---|---|
| >0 bis < 1 mm: | 15 Masse-%; |
| 1 bis < 3 mm: | 15 Masse-%; |
| 3 bis 8 mm: | 70 Masse-%. |

Die Schüttdichte des geblähten Perlits gemäß DIN EN 12580:2014-02 betrug 90 kg/m³.

Die Huminsäuren wurden als wässrige Lösung wasserlöslicher Huminsäuren zur Verfügung gestellt. Die wasserlöslichen Huminsäuren wiesen eine Molmasse unter 3.000 Dalton auf. Diese Huminsäuren lagen in einer Konzentration von 3 Masse-%, bezogen auf die Gesamtmasse der Lösung, in Wasser gelöst vor.

Um diese Huminsäurelösung auf den geblähten Perlit aufzutragen, wurden der geblähte Perlit und die Huminsäuren in einem Freifallmischer miteinander vermischt.

Hierzu wurde die Huminsäurelösung über Düsen in den Freifallmischer eingedüst, so dass sich ein Aerosol aus Huminsäurelösung in dem Freifallmischer ausbildete. Anschließend wurde dieses Aerosol der wässrigen Huminsäurelösung auf den geblähten Perlit aufgetragen, wobei der Auftrag weitgehend während des freien Falls des geblähten Perlits durch das Aerosol im Freifallmischer erfolgte.

Dieses Auftragen des Aerosols der wässrigen Huminsäurelösung auf den geblähten Perlit wurde für eine solche Dauer durchgeführt, bis der geblähte Perlit etwa 20 Masse-% der wässrigen Huminsäurelösung aufgenommen hatte, bezogen auf die Gesamtmasse aus geblähtem Perlit.

Der danach aus dem Freifallmischer ausgetragene geblähte Perlit, der die wässrige Huminsäurelösung aufgenommen hatte, lag als eine Ausführungsform des erfindungsgemäßen Bodenhilfsstoffs vor.

Durch die Aufnahme der wässrigen Huminsäurelösung waren auf die Körner aus geblähtem Perlit Huminsäuren in einer Konzentration von 0,6 Masse-% aufgetragen. Bei dieser Konzentration an Huminsäuren wies der geblähte Perlit eine schokoladenbraune Farbe auf.

Ferner umfasste dieser aus geblähtem Perlit und Huminsäuren hergestellte, erfindungsgemäße Bodenhilfsstoff, wie zuvor ausgeführt, einen Anteil an Wasser von 20 Masse-% auf, bezogen auf die Gesamtmasse des geblähten Perlits.

Dabei war praktisch die gesamte Oberfläche des geblähten Perlits mit Huminsäuren beschichtet, wobei gleichzeitig die offene Porosität des geblähten Perlits durch die Huminsäuren nicht beeinträchtigt war.

Die Korngrößenverteilung des geblähten Perlits hatte sich während des Mischvorgangs im Freifallmischer praktisch nicht verändert, so dass die Korngrößenverteilung des geblähten Perlits im Bodenhilfsstoff die vorbezeichnete Korngrößenverteilung des für die Durchführung des Verfahrens zur Verfügung gestellten geblähten Perlits aufwies.

Ein Teil des gemäß dem Ausführungsbeispiel erhaltenen Bodenhilfsstoffs wurde in reiner Form, also ohne weitere Komponenten, für die Kultur von Tomaten verwendet.

Ein anderer Teil des gemäß dem Ausführungsbeispiel erhaltenen Bodenhilfsstoffs wurde zur Herstellung eines Substrates verwendet. Hierzu wurde eine Komponente zur Herstellung eines Substrats in Form von Torf zur Verfügung gestellt und diese anschließend in einem Massenanteil von 70 Volumen-% mit 30 Volumen-% des gemäß dem Ausführungsbeispiel erhaltenen Bodenhilfsstoffs gemischt. Anschließend lag ein Substrat aus 70 Volumen-% Torf und 30 Volumen-% Bodenhilfsstoff vor.

Ein weiterer Teil des gemäß dem Ausführungsbeispiel erhaltenen Bodenhilfsstoffs wurde zur Herstellung eines anderen Substrates verwendet. Hierzu wurde eine Komponente zur Herstellung eines Substrats in Form von Holzfasern zur Verfügung gestellt und diese anschließend in einem Massenanteil von 85 Volumen-% mit 15 Volumen -% des gemäß dem Ausführungsbeispiel erhaltenen Bodenhilfsstoffs gemischt. Anschließend lag ein Substrat aus 85 Volumen-% Holzfasern und 15 Volumen-% Bodenhilfsstoff vor. Dieses Substrat wurde als Substrat für die Kultur von Topfkräutern verwendet.

## Patentansprüche

1. Bodenhilfsstoff, umfassend Körner aus geblähtem Perlit, wobei auf die Körner aus geblähtem Perlit Huminsäuren aufgetragen sind.

2. Bodenhilfsstoff nach Anspruch 1, wobei auf die Körner aus geblähtem Perlit Huminsäuren in einer solchen Konzentration aufgetragen sind, dass die Körner eine braune Farbe aufweisen.

3. Bodenhilfsstoff nach wenigstens einem der vorhergehenden Ansprüche, wobei die Huminsäuren in einer Konzentration im Bereich von 0,1 bis 2 Massen-% auf die Körner aus geblähtem Perlit aufgetragen sind, bezogen auf die Masse der Körner aus geblähtem Perlit.

4. Bodenhilfsstoff nach wenigstens einem der vorhergehenden Ansprüche, wobei die Huminsäuren in Form von wasserlöslichen Huminsäuren vorliegen.

5. Bodenhilfsstoff nach wenigstens einem der vorhergehenden Ansprüche, wobei der geblähte Perlit eine Korngröße im Bereich von > 0 mm bis 8 mm aufweist.

6. Bodenhilfsstoff nach wenigstens einem der vorhergehenden Ansprüche, wobei der geblähte Perlit Körner mit einer Korngröße unter 1 mm und Körner mit einer Korngröße von 1 mm und darüber umfasst.

7. Bodenhilfsstoff nach wenigstens einem der vorhergehenden Ansprüche, der Wasser umfasst.

8. Bodenhilfsstoff nach wenigstens einem der vorhergehenden Ansprüche, der zu wenigstens 90 Masse-% aus geblähtem Perlit, Huminsäuren und Wasser besteht.

9. Verwendung des Bodenhilfsstoff nach wenigstens einem der vorhergehenden Ansprüche als Substrat.

10. Verwendung des Bodenhilfsstoff nach wenigstens einem der vorhergehenden Ansprüche als Komponente in einem Substrat.

11. Substrat, welches einen Bodenhilfsstoff nach wenigstens einem der vorhergehenden Ansprüche umfasst.

12. Verfahren zur Herstellung eines Bodenhilfsstoffes, das die folgenden Schritte umfasst:
A. Zur Verfügungstellung von geblähtem Perlit;
B. Zur Verfügungstellung von Huminsäuren;
C. Auftragen der Huminsäuren auf den geblähten Perlit zur Herstellung eines Bodenhilfsstoffs.

13. Verfahren nach Anspruch 12, wobei die Huminsäuren in Form von wasserlöslichen Huminsäuren zur Verfügung gestellt werden.

14. Verfahren nach wenigstens einem der vorhergehenden Ansprüche, wobei die Huminsäuren als wässrige Lösung zur Verfügung gestellt werden.

15. Verfahren nach wenigstens einem der vorhergehenden Ansprüche, das die folgenden weiteren Schritte umfasst:
D. Zur Verfügungstellung wenigstens einer Komponente für ein Substrat;
E. Mischen des Bodenhilfsstoffs und der wenigstens einen Komponente zur Herstellung eines Substrats.
